(19) **Europäisches Patentamt / European Patent Office / Office européen des brevets**

(11) **EP 4 047 859 A1**

(12) # EUROPEAN PATENT APPLICATION

(43) Date of publication:
**24.08.2022 Bulletin 2022/34**

(21) Application number: **21157942.0**

(22) Date of filing: **18.02.2021**

(51) International Patent Classification (IPC):
***H04L 9/08*** (2006.01)

(52) Cooperative Patent Classification (CPC):
**H04L 9/0855**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Terra Quantum AG**
**9400 Rorschach (CH)**

(72) Inventors:
• **Kirsanov, Nikita**
  **9400 Rorschach (CH)**

• **Kenbaev, Nurbolat**
  **9400 Rorschach (CH)**
• **Sekatski, Pavel**
  **9400 Rorschach (CH)**
• **Kronberg, Dmitry**
  **9400 Rorschach (CH)**
• **Lesovik, Gordey**
  **9400 Rorschach (CH)**

(74) Representative: **Kretschmann, Dennis**
**Boehmert & Boehmert**
**Anwaltspartnerschaft mbB**
**Pettenkoferstrasse 22**
**80336 München (DE)**

(54) **LONG-DISTANCE QUANTUM KEY DISTRIBUTION**

(57) A method is provided for determining a secret cryptographic key shared between a sending unit and a receiving unit by using a communication channel comprising spatially separated amplifiers for secure long-distance communication. The method comprises transmitting a sequence of electromagnetic pulses via the communication channel through the amplifiers for establishing a shared secret cryptographic key, wherein each electromagnetic pulse corresponds to a bit of a random bit sequence according to a ciphering protocol, and at least one ciphering parameter is determined by maximizing the expected key generation rate using an information theoretic model, wherein a measured signal loss and at least one amplification parameter are taken into account as input parameters to the information theoretic model.

Fig. 1

**Description**

Technical Field

The disclosure relates to a method and communication apparatus for determining a secret cryptographic key shared between a sending unit and a receiving unit for secure long-distance communication.

Background

Quantum key distribution is a core element of communication protocols employing quantum resources for achieving fast and secure communications. The security of quantum key distribution relies on a reliable control of delicate quantum states along a quantum communication channel extending from a sending unit (conventionally called Alice) to a receiving unit (conventionally called Bob).

Quantum key distribution over long distances has been demonstrated by employing a variety of single photon sources, but typically suffers from low key exchange rates, detrimental effects due to intrinsic loss and decoherence at the sending unit, receiving unit or along the communication channel, as well as vulnerabilities with respect to various carefully designed attack schemes (eavesdropping by a malicious third party, conventionally called Eve).

Summary

It is an objective of the present disclosure to overcome such limitations and provide a simple and practical method and communication apparatus for determining and distributing a secret cryptographic key enabling secure communications with a high key exchange rate, in particular over long distances.

This objective is achieved by the method, communication apparatus, computer readable storage medium and computer program product as described in claims 1, 13, 14 and 15. Advantageous developments and embodiments are described in the dependent claims.

The disclosure relates to a method for determining a secret cryptographic key shared between a sending unit and a receiving unit by using a communication channel comprising spatially separated amplifiers for secure long-distance communication.

The method comprises transmitting, at the sending unit, at least one electromagnetic test pulse to the receiving unit via the communication channel, and determining a signal loss $r_E$ in the communication channel caused by an eavesdropper based on the at least one electromagnetic test pulse detected at the receiving unit.

The method further comprises transmitting, at the sending unit, a first sequence of electromagnetic pulses to the receiving unit via the communication channel through the spatially separated amplifiers, for establishing a shared secret cryptographic key.

Each electromagnetic pulse of the first sequence of electromagnetic pulses corresponds to a bit of a random bit sequence according to a ciphering protocol. At least one ciphering parameter of the ciphering protocol is determined by maximizing the expected key generation rate $L_f/L$ with respect to the at least one ciphering parameter using an information theoretic model for the expected key generation rate $L_f/L$. The determined signal loss $r_E$ and at least one amplification parameter of the spatially separated amplifiers are taken into account as input parameters to the information theoretic model.

Brief Description of the Figures

Fig. 1    is a schematic illustration of a communication setup according to an embodiment;

Fig. 2    schematically illustrates how several loss or amplification channels may be reduced to one pair of loss and amplification channels, in a communication setup according to an embodiment;

Fig. 3    schematically illustrates optical phase diagrams of quantum states in a communication setup according to an embodiment;

Fig. 4    is a schematic illustration of quantum measurements employed by Bob in a communication setup according to an embodiment;

Fig. 5    schematically illustrates a beam splitter attack employed by Eve on a communication protocol according to an embodiment;

Fig. 6  shows results for the achieved cryptographic key rate for different values of spatial distance between amplifiers in a communication setup according to an embodiment; and

Fig. 7  shows results for the achieved cryptographic key rate for different values of spatial distance between Alice and Bob in a communication setup according to an embodiment.

Detailed Embodiments

Techniques of the present disclosure will now be described with reference to exemplary embodiments, in a communication scenario in which a pair of communication units (conventionally called Alice and Bob, respectively) that are connected by means of a quantum channel and a classical information link employ quantum techniques to share between them a cryptographic key about which an eavesdropper (conventionally called Eve) tapping on the quantum channel and/or the classical information link can obtain (almost) no information. Such a cryptographic key could then be used by Alice and Bob as a one-time pad for interchanging sensitive information.

A special emphasis of embodiments of the present disclosure is on reliable and secure techniques for enabling the sharing of such a cryptographic key when Alice and Bob are separated by large spatial distances so that losses may occur in the quantum channel and the communication signals interchanged between Alice and Bob via the quantum channel may need to be amplified.

*1 Method description*

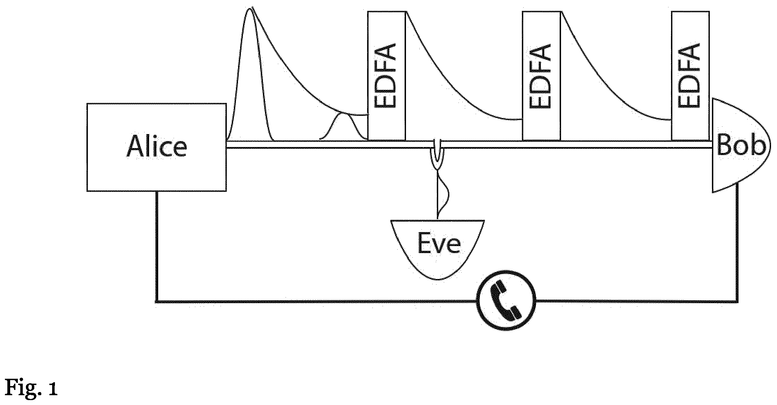

We propose a method for long-distance quantum key distribution (QKD) based on the signal amplification and physical control of the transmission line. A basic communication setup is illustrated schematically in Fig. 1.

In an examplary communication protocol in the communication setup of Fig. 1, Alice encodes a random bit string into a sequence of coherent pulses and sends it to Bob via the transmission line. The pulses pass through a sequence of Erbium Doped Fiber Amplifiers (EDFAs), and the resulting signals are then received and measured by Bob. The eavesdropper (Eve) can seize part of the signal: for instance, by bending the transmitting optical fiber and detecting the transcending optical modes. However, Alice and Bob monitor the losses in the line, and always know the proportion $r_E$ of the signal stolen by eavesdropper. Importantly, they can identify the exact losses caused and exploited by Eve. This knowledge enables Alice and Bob to adopt the most efficient bit ciphering and measurement scheme: Depending on $r_E$, Alice picks certain values of signal intensities which are optimal as far as the informational advantage over Eve is concerned; in a concerted manner, Bob adjusts his measurement routine. This in particular gives the authorized parties additional leverage as far as post-selection is concerned: After transmitting and receiving the random bit string, Alice and Bob use an authenticated public classical channel to perform information reconciliation (increasing their informational advantage over Eve) and privacy amplification - with the optimal parameters of ciphering and measurement these procedures allow to eradicate Eve's information without sacrificing too many bits.

Two principal ideas behind the method of the embodiment are: (i) the random bits are encoded into non-orthogonal coherent pulses which are amplified by a cascade of the in-line EDFAs to achieve long-distance transmission, and (ii) Alice and Bob can determine the exact proportion of the signal stolen by the eavesdropper (Eve) and distinguish it from the natural losses in the line (caused primarily by the Rayleigh scattering). Alice and Bob use the knowledge about losses to accurately estimate their informational advantage over Eve which in turn allows them to pick the pulses' intensities, adopt the measurement routine and perform post-selection in the most efficient way, leaving Eve (almost) no information about the final shared key.

The communication protocol may proceed in the following steps:

0. *Initial preparation.-* The existing techniques allow to determine losses with high precision and distinguish local losses (which could be caused by Eve) from the intrinsic natural losses homogeneous across the whole line and caused mainly by the Rayleigh and Raman scattering. As a part of the initial equipment setting, Alice and Bob determine the natural losses $r_0$ in the transmission line which cannot be caused by Eve. Bob and Alice share the value of $r_0$ via the authenticated classical communication channel.

1. Alice and Bob determine a total signal loss $r_t$ in the communication channel via transmitting test pulses, see Sec. 5. After that, they obtain the signal loss $r_E$ caused by an eavesdropper by subtracting the intrinsic signal loss $r_0$ from the total signal loss $r_t$, i.e., $r_E = r_t - r_0$. Bob and Alice share the value of $r_E$ via the authenticated classical communication channel.

2. Using a physical random number generator (possibly quantum), Alice generates a bit sequence **R** of length $L$.

3. Alice ciphers **R** into a series of $L$ coherent light pulses which she sends to Bob. The bits 0 and 1 are defined by the coherent states $\gamma_0 = \gamma$ and $\gamma_1 = -\gamma$ respectively, - without loss of generality, assume that $\gamma \in \mathfrak{R}$ - and the value of $\gamma$ is chosen optimally given the known specific value of $r_E$. This means that Alice uses such coherent states that they correspond to the maximum key generation speed with respect to the losses in the channel. The intensity of the pulse $\pm \gamma$ is determined by the average photon number

$$\langle n \rangle = |\gamma|^2. \qquad (1)$$

4. The signal is amplified by a cascade of EDFAs installed equidistantly along the whole optical line. Each amplifier compensates the losses in such a way that the amplified signal intensity equals to the initial one. As a coherent pulse passes through amplifiers, its state becomes mixed. Bob receives the signal and performs a homodyne measurement, the parameters of which are again determined by the known value of $r_E$.

5. Alice and Bob apply information reconciliation. Some of the Bob's measurements will have inconclusive results, and the corresponding bits must be discarded. To do so, Bob announces positions of invalid bits to Alice publicly via an authenticated public classical channel.

6. Alice and Bob estimate the error rate and perform the error correction procedure.

7. Alice and Bob perform privacy amplification. Using a special protocol, Alice and Bob produce a shorter key, which Eve has no (or negligibly small) information about. Once again, Alice and Bob may need to use their authenticated public classical channel.

8. Alice and Bob perform steps 1 to 7 until the length of the shared key is appropriate.

## 2 Signal amplification

In this section we address the physics of signal amplification. For this, we first introduce the framework based P-function representation and show how the signal state evolves under the ideal amplification process. We then consider the practical case of amplification in doped fibers with the associated losses in the channel. We further show that a cascade of amplifiers can be theoretically reduced to one effective amplifier - we will use this formal property in further sections for the analysis of legitimate users' informational advantage over the eavesdropper.

### 2.1 P-function and its evolution under amplification

Let us introduce our theoretical framework. Consider a single phonic mode with bosonic operators $\hat{a}$ and $\hat{a}^\dagger$ acting in the Fock space. To understand the effect of the amplification on the bosonic mode state, it is most convenient to use the P-function representation of the latter. Such representation allows to express any density operator as a quasi-mixture of coherent states:

$$\hat{\rho} = \int d^2\alpha \, \mathrm{P}(\alpha) |\alpha\rangle\langle\alpha|, \qquad (2)$$

where $d^2\alpha \equiv d\mathrm{Re}(\alpha) \, d\mathrm{Im}(\alpha)$ and the quasi-probability distribution $\mathrm{P}(\alpha)$ is not necessarily positive. For a given state described by density matrix $\hat{\rho}$ the P-function can be written as

$$\mathrm{P}(\alpha) = \mathrm{tr}\hat{\rho} : \delta(\hat{a} - \alpha): \qquad (3)$$

where

$$:\delta(\hat{a}-\alpha):=\frac{1}{\pi^2}\int d^2\beta\, e^{\alpha\beta^*-\alpha^*\beta}e^{\beta\hat{a}^\dagger}e^{-\beta^*\hat{a}}. \qquad (4)$$

Additional details can be found in W. Vogel, D.G. Welsch, S. Wallentowitz: "Quantum Optics: An Introduction"; Wiley, 2001.

Phase-amplification is described by a quantum channel given by

$$\mathrm{Amp}_{G=\cosh^2(g)}:\hat{\rho}\mapsto\mathrm{Amp}_G[\hat{\rho}]\quad = \mathrm{tr}_b\hat{U}_g\,\hat{\rho}\otimes|0\rangle\langle0|_b\,\hat{U}_g^\dagger$$
$$\hat{U}_g = e^{g(\hat{a}^\dagger\hat{b}^\dagger-\hat{a}\,\hat{b})}, \qquad (5)$$

where $g$ is the interaction parameter characterizing the amplifier, $G=\cosh^2(g)$ is the factor by which the intensity of the input signal is amplified (as we will explicitly see in the following formulae), and annihilation operator $\hat{b}$ corresponds to the auxiliary mode starting in the vacuum states. An explicit Kraus representation of the channel can be written as

$$\mathrm{Amp}_G(\hat{\rho}) = \sum_{n=0}^{\infty}\hat{K}_n\hat{\rho}\hat{K}_n \qquad (6)$$

with $\hat{K}_n = \frac{\tanh^n(g)}{\sqrt{n!}}\hat{a}^{\dagger n}\cosh^{-\hat{a}\,\hat{a}^\dagger}$ , see e.g. P. Sekatski et al., "Cloning entangled photons to scales one can see"; Phys. Rev. A 82(5), Nov. 2010.

To show how the P-function of a state changes under the amplification process, let us consider a simple situation where the input signal is in the pure coherent state $|\beta\rangle\langle\beta|$ with the corresponding initial P-function $P_i(\alpha) = \delta(\alpha-\beta)$ (delta-function on complex numbers). After the amplification, the P-function becomes

$$P(\alpha;\beta,g) = \mathrm{tr}:\delta(\hat{a}-\alpha):\mathrm{Amp}_G[|\beta\rangle\langle\beta|]. \qquad (7)$$

Bearing in mind that

$$\mathrm{Amp}_G^*[\hat{a}] = \hat{U}_g^\dagger\,\hat{a}\,\hat{U}_g = \cosh(g)\hat{a} + \sinh(g)\hat{b}^\dagger, \qquad (8)$$

it is easy to see that

$$\boxed{P(\alpha;\beta,g) = \frac{1}{\pi(G-1)}\exp\left(-\frac{|\alpha-\sqrt{G}\beta|^2}{G-1}\right).} \qquad (9)$$

In other words, the output state is a mixture of normally distributed states centered around $|\sqrt{G}\beta\rangle$; the width of the distribution is $(G-1)/\sqrt{2}$.

### 2.2 Amplification in doped fibers and losses

In an Er/Yt doped fiber the phonic mode propagates through the inverted atomic medium. To keep the medium inverted, a seed laser of a different frequency co-propagates with the signal phonic mode in the fiber and is then filtered out at the output by means of wavelength-division multiplexing (WDM). The interaction between the inverted atoms at position z and propagating light field mode $\hat{a}$ is precisely given by the Hamiltonian

$$H = \mathrm{i}(\hat{a}^\dagger\hat{b}_z^\dagger - \hat{a}\hat{b}_z), \qquad (10)$$

where $\hat{b}_z$ corresponds to a collective desecration of one of the atoms. Hence, the evolution of the signal mode after its propagation through EDFA is set by a composition of infinitesimal phase-amplifications which, as we show in the next subsection, can be effectively reduced to a single amplification channel.

In practice, the performance of EDFA suffers from technical limitations, which come in addition to the amplification limits on added quantum noise. These limitations are mainly caused by two factors:

(i) the atomic population may be not completely inverted throughout the media, and
(ii) coupling imperfection between the optical mode and EDFA or optical fiber.

Both of these mechanisms can be taken into account as a loss channel acting on the state before the amplification, as shown by B. Sanguinetti et al., "Quantum cloning for absolute radiometry"; Phys. Rev. Lett. 105(8), Aug. 2010.

Let us introduce the loss channel describing all possible losses in the line. Equation (8) describes the action of amplifier on the annihilation operator in the Heisenberg picture. In the same way we can express the canonical transformation associated with losses

$$
\mathrm{Loss}_T^*[\hat{a}] = \widehat{\widehat{U}}_\lambda^\dagger \hat{a} \widehat{\widehat{U}}_\lambda \quad
\begin{aligned}
&= \cos(\lambda)\,\hat{a} + \sin(\lambda)\,\hat{c} \\
&= \sqrt{T}\hat{a} + \sqrt{1-T}\hat{c}, \\
\mathrm{T} &= \cos^2(\lambda),
\end{aligned}
\tag{11}
$$

where $T$ is the proportion of the transmitted signal, the annihilation operator $\hat{c}$ corresponds to the initially empty mode which the lost photons go to, and

$$
\widehat{\widehat{U}}_\lambda = e^{\lambda \hat{a}^\dagger \hat{c} - \lambda \hat{a}\,\hat{c}^\dagger}.
$$

### 2.3 Composition of amplifiers and losses

In our cryptographic scheme the amplification is used to recover the optical signal after it suffers from losses. Long-distance QKD requires a cascade of amplifiers, in which case the signal evolution is determined by a sequence of multiple loss and amplification channels.

In this section we prove that any such sequence can be mathematically reduced to a composition of one loss and one amplification channels. We will later adopt this simple representation for the informational analysis of our protocol.

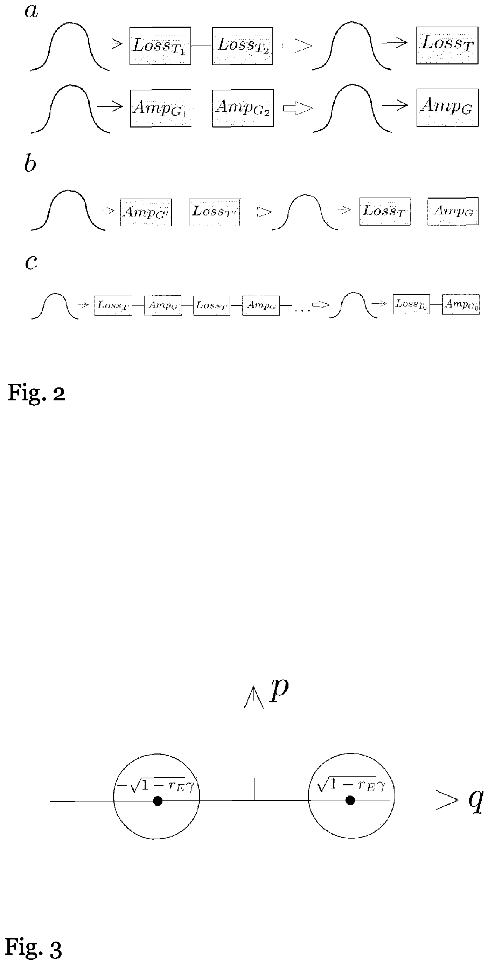

Figure 2 graphically illustrates how (a) two loss or amplification channels can be reduced to one; (b) loss and amplification channels can be effectively rearranged; and (c) a series of losses and amplifiers can be reduced to one pair of loss and amplification.

*Statement 1. Two loss or amplification channels can be reduced to one*

First, we show that a pair of loss or amplification channels can be effectively reduced to one, see Fig. 2 (a). Consider two consequent loss channels:

$$
\begin{aligned}
(\mathrm{Loss}_{T_2} \circ \mathrm{Loss}_{T_1})^*[\hat{a}]
&= \widehat{\widehat{U}}_{\lambda_1}^\dagger \widehat{\widehat{U}}_{\lambda_2}^\dagger \hat{a}\, \widehat{\widehat{U}}_{\lambda_2} \widehat{\widehat{U}}_{\lambda_1} \\
&= \mathrm{Loss}_{T_1}(\sqrt{T_2}\hat{a} + \sqrt{1-T_2}\hat{c}_2) \\
&= \sqrt{T_2 T_1}\hat{a} + \sqrt{T_2(1-T_1)}\hat{c}_1 + \sqrt{1-T_2}\hat{c}_2 \\
&= \sqrt{T_2 T_1}\hat{a} + \sqrt{1-T_1 T_2}\hat{c},
\end{aligned}
\tag{12}
$$

where we defined operator

$$
\hat{c} = \frac{\sqrt{T_2(1-T_1)}\hat{c}_1 + \sqrt{1-T_2}\hat{c}_2}{\sqrt{1-T_1 T_2}},
\tag{13}
$$

acting on the vacuum state and satisfying the canonical commutation relation $[\hat{c}, \hat{c}^\dagger] = 1$. We can thus represent two channels in the form of one effective channel:

$$\text{Loss}_{T_2} \circ \text{Loss}_{T_1} = \text{Loss}_{(T=T_1 T_2)} \tag{14}$$

The same reasoning can be applied to amplifiers:

$$\text{Amp}_{G_2} \circ \text{Amp}_{G_1} = \text{Amp}_{(G=G_2 G_1)} \tag{15}$$

*Statement 2. Loss and amplification channels can be effectively rearranged*

Let us show that a composition of an amplification channel followed by a loss channel can be mathematically replaced with a pair of certain loss and amplification channels acting in the opposite order, cf. Fig.2 (b). Consider the transformation corresponding to an amplification followed by a loss

$$
\begin{aligned}
(\text{Loss}_{T'} \circ \text{Amp}_{G'})^*[\hat{a}] &= \hat{U}_{g'}^\dagger \hat{U}_{\lambda'}^\dagger \hat{a} \, \hat{U}_{\lambda} \hat{U}_g \\
&= \text{Amp}_{G'}^*[\sqrt{T'}\hat{a} + \sqrt{1-T'}\hat{c}] \\
&= \sqrt{T'G'}\hat{a} + \sqrt{(1-T')}\hat{c} + \sqrt{T'(G'-1)}\hat{b}^\dagger.
\end{aligned}
\tag{16}
$$

In the case of the opposite order we have

$$
\begin{aligned}
(\text{Amp}_G \circ \text{Loss}_T)^*[\hat{a}] &= \hat{U}_\lambda^\dagger \hat{U}_g^\dagger \hat{a} \, \hat{U}_g \hat{U}_\lambda \\
&= \text{Loss}_T^*[\sqrt{G}\hat{a} + \sqrt{G-1}\hat{b}^\dagger] \\
&= \sqrt{TG}\hat{a} + \sqrt{G(1-T)}\hat{c} + \sqrt{G-1}\hat{b}^\dagger.
\end{aligned}
\tag{17}
$$

It is easy to see that the two transformations are identical if

$$
\boxed{
\begin{aligned}
\text{Loss}_{T'} \circ \text{Amp}_{G'} &= \text{Amp}_G \circ \text{Loss}_T \\
T &= \frac{G'T'}{(G'-1)T'+1} \\
G &= (G'-1)T'+1.
\end{aligned}
}
\tag{18}
$$

In other words, the two types of channels "commute" provided that the parameters are modified in accord with these relation. In particular, the parameters in the equation above are always physically meaningful $G \geq 1$, $0 \leq T \leq 1$, meaning that we can always represent loss and amplification in form of a composition where loss is followed by amplification (the converse is not true).

*Statement 3. A series of losses and amplifiers can be reduced to one pair of loss and amplification*

Let us finally show that a sequence of loss and amplification channels can be mathematically represented as one pair of loss and amplification, see Fig. 2 (c). Consider the transformation

$$\Phi_M = (\text{Amp}_G \circ \text{Loss}_T)^{\circ M}, \tag{19}$$

corresponding to a series of *M* identical loss and amplification channels, for which we want to find a simple representation. According to Statement 2, we can effectively move all losses to the right side of the composition, i.e., permute the channels is such a way that all losses act before amplification. Every time a loss channel with transmission probability $T_{(i)}$ is moved before an amplifier with amplification factor $G_{(i)}$, the parameters are transformed in accord with Eq. (18):

$$
\begin{aligned}
T_{(i)} &\mapsto T_{(i+1)} = \frac{G_{(i)}T_{(i)}}{(G_{(i)}-1)T_{(i)}+1} \\
G_{(i)} &\mapsto G_{(i+1)} = (G_{(i)}-1)T_{(i)}+1.
\end{aligned}
\tag{20}
$$

In our sequence we can pairwise transpose all neighbouring loss with amplifier (starting with the first amplifier and the second loss). After repeating this $M$ - 1 times, bearing in mind Statement 1, we find that

$$
\begin{aligned}
\Phi_M \quad &= \mathrm{Amp}_{G_{(0)}} \circ \mathrm{Amp}_{G_{(1)}} \circ \ldots \circ \mathrm{Amp}_{G_{(M-1)}} \\
&\circ \mathrm{Loss}_{T_{(M-1)}} \circ \mathrm{Loss}_{T_{(M-2)}} \circ \ldots \circ \mathrm{Loss}_{T_{(0)}} \\
&= \mathrm{Amp}_{G_\circ} \circ \mathrm{Loss}_{T_\circ},
\end{aligned} \tag{21}
$$

where

$$
\begin{aligned}
T_\circ \quad &= \prod_{i=0}^{M-1} T_{(i)}, \\
G_\circ \quad &= \prod_{i=0}^{M-1} G_{(i)},
\end{aligned} \tag{22}
$$

i.e., a series of losses and amplifiers is equivalent to a loss channel of transmission $T_o$ followed by an amplifier with amplification factor $G_o$.

Note now that the value $\mu \equiv G_{(i)} T_{(i)} = GT$ cannot be changed by permutations. Let us define

$$
F_{(i)} = (G_{(i)} - 1)T_{(i)} + 1, \tag{23}
$$

and bear in mind that

$$
F_{(i+1)} = (G_{(i+1)} - 1)T_{(i+1)} + 1 = \frac{(F_{(i)}-1)}{F_{(i)}} TG + 1 = \mu \left( \frac{F_{(i)}-1}{F_{(i)}} \right) + 1. \tag{24}
$$

We can write

$$
\begin{aligned}
T_{(i+1)} \quad &= \frac{TG}{F_{(i)}} \\
G_{(i+1)} \quad &= F_{(i)},
\end{aligned} \tag{25}
$$

and

$$
\begin{aligned}
G_\circ \quad &= G \prod_{i=0}^{M-2} F_{(i)}, \\
T_\circ \quad &= \frac{T(TG)^{M-1}}{\prod_{i=0}^{M-2} F_{(i)}} = \frac{(TG)^M}{G_\circ}.
\end{aligned} \tag{26}
$$

Let us find the explicit form of $G_o$ and $T_o$ by solving the recurrence relation. Define $A_n$ and $B_n$ through the relation

$$
F_{(n-1)} = \frac{A_n}{B_n}. \tag{27}
$$

Then

$$
F_{(n+1)} = \frac{(\mu+1)F_{(n)} - \mu}{F_{(n)}} = \frac{(\mu+1)A_{n+1} - \mu B_{n+1}}{A_{n+1}}. \tag{28}
$$

It follows from Eqs. (27) and (28) that $B_{n+1} = A_n$ and

$$A_{n+1} = (\mu + 1)A_n - \mu B_n = (\mu + 1)A_n - \mu A_{n-1}. \tag{29}$$

We see that the solution of this equation has a form

$$A_n = c_1 + c_2 \mu^n, \tag{30}$$

where $c_1$ and $c_2$ are the constants, which are determined by $F_0 = (G - 1)T + 1$: we take $A_1 = (G - 1)T + 1$ and $A_0 = 1$, and obtain

$$c_1 = \frac{T-1}{GT-1} \qquad c_2 = \frac{(G-1)T}{GT-1}. \tag{31}$$

Notably, the product $\prod_{n=0}^{M-2} F_{(n)}$ appearing in the final expression becomes relatively simple

$$\begin{aligned}
\prod_{n=0}^{M-2} F_{(n)} \quad &= \prod_{n=0}^{M-2} \frac{A_{n+1}}{A_n} = \frac{A_{M-1}}{A_0} \\
&= \frac{(G-1)(GT)^M + G(T-1)}{G(GT-1)},
\end{aligned} \tag{32}$$

and we have

$$\boxed{\begin{aligned}
\Phi_M \quad &= (\mathrm{Amp}_G \circ \mathrm{Loss}_T)^{\circ M} = \mathrm{Amp}_{G_\circ} \circ \mathrm{Loss}_{T_\circ} \\
G_\circ \quad &= \frac{(G-1)(GT)^M + G(T-1)}{GT-1} \\
T_\circ \quad &= \frac{(TG)^M}{G_\circ}.
\end{aligned}} \tag{33}$$

The case of $TG = 1$ is particularly interesting as the average intensity of the transmitted signal remains preserved (which is different from the total output intensity as it has the noise contribution). In the limit $G \to 1/T$ we have

$$\boxed{\begin{aligned}
G_\circ \quad &= G(M(1-T) + T) \\
T_\circ \quad &= \frac{T}{M(1-T) + T},
\end{aligned}} \tag{34}$$

### 3 Control of the transmission line

To monitor the eavesdropper's activity, Alice may send, at appropriate intervals, special test pulses (individual or many, see the discussion below) and cross-check the intensities with Bob. The test pulses should have the highest intensity possible, which must not, however, damage Bob's detection equipment. By producing and analysing the corresponding scattering matrix, Alice and Bob can determine the losses in the channel. Importantly, the authorized parties can classify the losses into those which are and are not caused and exploited by Eve.

Assume that the transmission line (optical fiber) is properly installed, i.e., it does not have points of significant inflections and crude junctions. Then, most of the intrinsic natural losses (of proportion $r_0$) in the line occur due to Rayleigh scattering. Such losses are distributed across the whole line. Therefore, Eve cannot pick up the dissipated signal effectively, unless she has an antenna covering a significant part of the line - and the concealed construction of such an antenna is not practically feasible.

The only option remaining to the eavesdropper is to take away part of the signal deliberately, that is to create and exploit the losses additional to the natural ones (namely, by bending the optical fiber intentionally). Alice and Bob can identify and measure such artificial losses. To do that, they must first determine the magnitude of losses not associated with the eavesdropper's activity; this can be done by measuring the losses appearing homogeneously across the hole line before the beginning of the protocol. After that, Alice and Bob can precisely determine the newly appearing local leaks of the signal (with proportion $r_E$) possibly intercepted by Eve. This knowledge ensures the most efficient ciphering and measurements routines, determining in turn the post-selection procedure.

We propose the following method for detection of losses allowing to improve the efficiency of the protocol: Let $\tau_S$ be the length of the signal pulse, and $\tau_T$ be the total length of a sequence of test pulse (test pulses may look completely like the signal ones, but their sequence should contain much more photons than one signal pulse). Both types of pulses can be characterized by the same constant power, e.g., $P$ = 20 mW, but $\tau_T$ should be much greater than

$\tau_S$, e.g., $\tau_T$ = 1 ms and $\tau_S$ = 1 ns. The average number of photons in the test pulse is $\langle n_T \rangle = \frac{P\tau_T}{h\nu} \sim 10^{14},$ where $\nu$ is the light frequency. The measurement error $\delta n_T$ on Bob's side has two main contributions:

1. The detection error due to the Poisson statistics of light $\delta n_T^P \sim \sqrt{\langle n_T \rangle} \sim 10^7.$

2. The error due to the pulse amplification $\delta n_T^A \sim \sqrt{\langle n_T \rangle GM}$ (when $GM \gg 1$), where $G$ is the amplification factor of a single amplifier and $M$ is the total number of amplifiers. If the distance between two neighboring amplifiers is $d$ = 50 km, and the distance between Alice and Bob is $D_{AB}$ = 10000 km, then $M$ = 200 and $G$ = 10 in which case

$\delta n_T^A \sim 10^9.$

Thus, $\delta n_T$ is determined by $\delta n_T^A$. The test pulse allows to detect leakage of magnitudes $r_E \geq \delta T_T = \delta n_T / \langle n_T \rangle$ = $10^{-5}$. Similar control and analysis of the reflected signal must be performed on Alice's end.

Other possibilities for the testing procedure:

1. *Individual pulses.-* Alice sends a single testing pulse the parameters of which are chosen randomly. The preparation of the pulse implies generating an auxiliary random bit sequence and translating it into the random intensity, phase (e.g., from 0 to $\pi$), length (e.g., from 1 to $10^6$ ns) and shape of the pulse. After Bob measures the test pulse, he verifies its parameters with Alice, and they determine the losses in the channel.

2. *Sequence of pulses.-* Alice sends a sequence of test pulses in which she encodes an auxiliary random sequence. This involves generating an auxiliary random sequence and ciphering it (using, for instance, the intensity or phase ciphering adjusted for the classical intensities) in a sequence of pulses. Bob measures the pulses, verifies the encoded message with Alice, after what they determine the losses.

*4 Measurement scheme*

The state of the optical signal can be described in terms of its quadratures given by operators

$$\hat{q} = \frac{\hat{a}^\dagger + \hat{a}}{2},$$
$$\hat{p} = \frac{i(\hat{a}^\dagger - \hat{a})}{2}. \tag{35}$$

These operators represent the real and imaginary parts of the signal's complex amplitude, and by measuring one of the quadratures one can distinguish between different signals.

Bob needs to distinguish between two states $|\gamma_0\rangle = |\gamma\rangle$ and $|\gamma_1\rangle = |-\gamma\rangle$ (with $\gamma \in \mathfrak{R}$) transformed by losses and amplifiers, - two Gaussians with centers laying on the real axis ($q$-axis) of the optical phase space. This is illustrated in Fig. 3, which shows the optical phase diagrams of states corresponding to bit values 0 and 1 after they pass through the sequence of losses and amplifications. The two output states constitute Gaussians centered at $\pm\sqrt{1 - r_E}\gamma,$ where $r_E$ is the proportion of signal stolen by Eve. To this end, Bob measures the q-quadrature. Bob may perform his measurements by means of homodyne detection described by the following POVM operators:

$$\hat{E}_0 = \int_\Theta^\infty dq |q\rangle\langle q|,$$
$$\hat{E}_1 = \int_{-\infty}^{-\Theta} dq |q\rangle\langle q|, \qquad\qquad (36)$$
$$\hat{E}_{\text{fail}} = \hat{I} - \hat{E}_0 - \hat{E}_1,$$

where $|q\rangle$ is the eigenstate of $\hat{q}$, and the parameter $\Theta$ is tuned by Bob depending on the amount of losses possibly stolen by Eve, cf. A. Peres, "Quantum Theory. Concepts and Methods"; Fundamental Theories of Physics; Springer Netherlands, 2006, and the discussion further below.

In Eq. (36), $\hat{E}_{0(1)}$ determines the bit value 0(1), whereas $\hat{E}_{\text{fail}}$ is associated with the bad outcome and the respective bit should be discarded by Alice and Bob on the stage of post-selection.

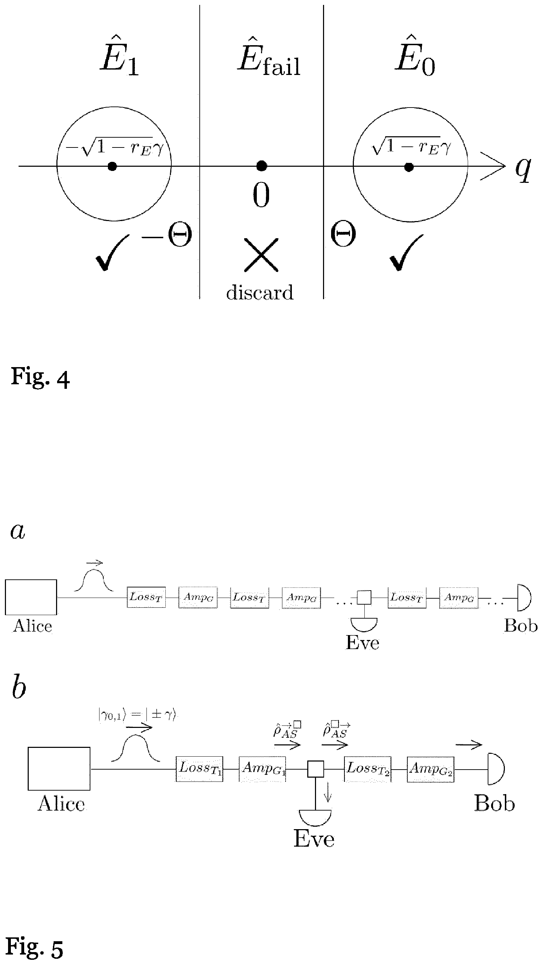

Fig. 4 is a schematic representation of the POVM employed by Bob. The two signal states are Gaussians overlapping the most in the region of phase space corresponding to $\hat{E}_{\text{fail}}$. Therefore, Alice and Bob consider the associated outcome inconclusive and discard it on the post-selection stage. The outcomes associated with $\hat{E}_0$ and $\hat{E}_1$ are considered conclusive. The value of $\Theta$ is varied to perform the most efficient post-selection procedure as far as the final key generation rate is concerned. By looking at Fig. 4, one can see that $\hat{E}_{\text{fail}}$ corresponds to the phase space region where the two states (Gaussians) overlap the most, and thus the associated outcome is inconclusive.

### *5 Error estimate and correction*

After the measurements and post-selection procedure of discarding invalid bits, Alice and Bob may perform an error correction procedure. The quadrature value $q$ obtained from the homodyne measurement allows to estimate the probability of error in the corresponding bit - one can easily compute the conditional error probability for every $q$. In reality, the error rate is also determined by channel imperfections and Eve's detrimental activities. Therefore, in practice, instead of the theoretical prognosis, the error correction procedure should be mainly predicated based on the direct measurement of error, e.g., by disclosing a part of the raw key to observe the error.

One option for the practical error estimation is to disclose one half of the raw key. But if the raw key is long enough (e.g., more that 10,000 bits), already a relatively short part (e.g., 1,000 bits) can provide an accurate error estimate. According to this technique, Alice and Bob may use their public authenticated channel to select a number of bit positions in the raw key and publicly announce the corresponding bit values. Then, using Bayes' theorem, they can make a guess about the expected error rate for the remaining part of the raw key. Alternatively, instead of the bit values Alice and Bob can disclose the parity bits for some selected blocks of raw key positions. This method gives a better estimate for small error rate values, but is worse for high error rates. The decision about the block size can be made taking into account the theoretical estimates based on the observed values of q. For example, if the raw error estimate is approximately 6%, blocks of length 10 can be used, since the probability for parity bits mismatch in this case is approximately 36%, which is large, but still below 50%, meaning that the parity data reveal a lot of information about the real error rate.

After estimating the error rate, Alice and Bob may perform an error correction procedure. For this they may use the low-density parity-check (LDPC) codes as described in D. J. C. MacKay: "Information Theory, Inference and Learning Algorithms"; Cambridge University Press, 2003. The input for such codes are the probabilities of zero or one at each bit position and the syndrome of the correct bit string - the set of parity bits which are sufficient to correct the errors, taking into account the a priori probabilities for each position. LPDC codes are particularly good for error correction after homodyne measurement, since the measurement result $q$ itself allows to calculate the probabilities for correct and erroneous results.

After Alice and Bob correct errors in a (possibly small) part of the raw key, they can take into account the number of errors in this part to yield a more accurate error estimate for the remaining key. We propose the following adaptive procedure:

Alice and Bob first take a relatively short subset of the original raw key (whose size depends on the codeword's length, e.g., 1,000 bits), and apply an error correcting procedure which is designed for high error rates (e.g., 10% in the case that the preliminary crude estimation gave just 5% error probability). After correcting errors in this small subset, Alice and Bob know the number of errors therein, and have a better error rate estimate for the remaining part of the key. Then, they can take another short subset (e.g., once again, 1,000 bits) and perform error correction according to the new improved error rate estimate, and so on. With each iteration, the error estimate becomes more accurate, making the error correction procedure more efficient. This method can be applied without having an initial error estimate at all, which can save Alice and Bob a large part of the raw key.

The error correction procedure discloses some information about the key. For linear codes like LDPC codes, one syndrome bit discloses no more than one bit of information about the key, thus the syndrome length is an appropriate upper bound for the information leakage.

*6 Privacy amplification*

Although after the error correction procedure, Alice and Bob share the same bit string, this string can be correlated with Eve, thus it should not be used as the final secret key. The key distillation procedure described by C. H. Bennett et al., "Privacy amplification by public discussion"; SIAM J. Comput. 17(2): 210-229, April 1988; I. Devetak and A. Winter, "Distillation of secret key and entanglement from quantum states"; Proc. Royal Soc. A: Mathematical, Physical and Engineering Sciences 461(2053):207-235, Jan. 2005, and G. Brassard and L. Salvail, "Secret-key reconciliation by public discussion"; Proc. EUROCRYPT '93, Springer 1994, pp. 410-423, is aimed to eradicate Eve's information, and produces a new shorter bit string. This new string can finally be used as a secret key as Eve does not possess any (or almost any) information about it.

To eliminate the eavesdropper information, Alice and Bob can, for instance, use a universal hashing method. This method requires them to initially agree on the family $H$ of hash functions $h \in H$. At the privacy amplification stage, they randomly select such a function $h: \{0,1\}^{l_1} \to \{0,1\}^{l_2}$ from this family that maps the original bit string of length $l_1$ to the final key of length $l_2$. If Eve knows $e$ bits from the raw key, $l_2$ must be equal to $l_1$ - $e$.

One example of $H$ is the Toeplitz matrices family. Alice and Bob can use a random binary Toeplitz matrix $T$ with $l_1$ rows and $l_2$ columns. Then they represent their bit string as a binary vector $v$, and the final key $k$ is given by

$$k = T \cdot v.$$

*7 Eve's attack*

Let us demonstrate the operation of the protocol in the case where Eve performs a beam splitter attack seizing part of the signal somewhere along the optical line.

Here we will use the term "beam splitter" to refer to the point of Eve's intervention into the line. The beam splitter is assumed ideal, meaning that there is no reflection in Alice's direction. If the signal intensity incident to the beam splitter is 1, then intensity $r_E$ goes to Eve, and 1 - $r_E$ goes to Bob's direction.

Figure 5 schematically illustrates (a) the beam splitter attack on the protocol; Eve seizes part of the signal somewhere along the optical line; and (b) a scheme equivalent to (a), in which the losses and amplifiers before and after the point of Eve's intervention are represented by two pairs of loss and amplification channels defined by the parameters $\{T_1, G_1\}$ and $\{T_2, G_2\}$ respectively.

*7.1 Losses and amplifiers*

The proportion of transmitted signal on distance $d$ between two neighbouring amplifiers is determined by

$$T = 10^{-\mu d}, \qquad\qquad (37)$$

where $\mu$ = 1/50 km$^{-1}$ is the parameter of losses typical for the optical fibers. As was mentioned before, the amplification factor of each amplifier is $G = 1/T$. Let $D_{AB(AE)}$ be the distance between Alice and Bob (Alice and Eve), then the numbers of amplifiers before and after the beam splitter $M_1$ and $M_2$ are given by

$$M_1 = D_{AE}/d, \qquad\qquad (38)$$

$$M_2 = (D_{AB} - D_{AE})/d. \qquad\qquad (39)$$

In accord with the Statement 3 from Sec. 2.3 and as illustrated in Fig. 5 (b), the scheme can be simplified by reducing the losses and amplifications before and after the beam splitter to two loss and aplification pairs with the parameters $\{T_1, G_1\}$ and $\{T_2, G_2\}$ respectively:

$$T_1 = \frac{T}{M_1(1-T)+T} = \frac{10^{-\mu d}}{(1-10^{-\mu d})D_{AE}/d+10^{-\mu d}}, G_1 = \frac{1}{T_1},$$
$$T_2 = \frac{T}{M_2(1-T)+T} = \frac{10^{-\mu d}}{(1-10^{-\mu d})(D_{AB}-D_{AE})/d+10^{-\mu d}}, G_2 = \frac{1}{T_2}. \qquad (40)$$

*7.2 Evolution of systems' state*

Let us describe the progressive evolution of the combined systems' state. The initial state of Alice's random bit ($A$) - her random number generator - and the corresponding signal ($S$) is given by

$$\hat{\rho}_{AS}^{\text{i}} = \frac{1}{2}|0\rangle\langle 0|_A \otimes |\gamma\rangle\langle\gamma|_S + \frac{1}{2}|1\rangle\langle 1|_A \otimes |-\gamma\rangle\langle-\gamma|_S. \tag{41}$$

As the signal undergoes transformations associated with losses and amplifications, the state of the AS-system just before the signal passes the beam splitter is given by

$$\begin{aligned}
\hat{\rho}_{AS}^{\rightarrow} &= \frac{1}{2}|0\rangle\langle 0|_A \otimes \int d^2\alpha P_{\sqrt{T_1}\gamma,G_1}(\alpha)\alpha\rangle\langle\alpha|_S \\
&+ \frac{1}{2}|1\rangle\langle 1|_A \otimes \int d^2\alpha P_{-\sqrt{T_1}\gamma,G_1}(\alpha)|\alpha\rangle\langle\alpha|_S \\
&= \frac{1}{2}|0\rangle\langle 0|_A \otimes \int d^2\alpha \frac{1}{\pi(G_1-1)} e^{-\frac{|\alpha-\sqrt{G_1 T_1}\gamma|^2}{G_1-1}} |\alpha\rangle\langle\alpha|_S \\
&+ \frac{1}{2}|1\rangle\langle 1|_A \otimes \int d^2\alpha \frac{1}{\pi(G_1-1)} e^{-\frac{|\alpha-\sqrt{G_1 T_1}\gamma|^2}{G_1-1}} |-\alpha\rangle\langle-\alpha|_S.
\end{aligned} \tag{42}$$

Defining

$$\hat{\rho}_{AS}^{\rightarrow}[\alpha] = \frac{1}{2}|0\rangle\langle 0|_A \otimes |\alpha\rangle\langle\alpha|_S + \frac{1}{2}|1\rangle\langle 1|_A \otimes |-\alpha\rangle\langle-\alpha|_S, \tag{43}$$

we can rewrite Eq. (42) as

$$\hat{\rho}_{AS}^{\rightarrow} = \int d^2\alpha\, P_{\sqrt{T_1}\gamma,G_1}(\alpha)\, \hat{\rho}_{AS}^{\rightarrow}[\alpha]. \tag{44}$$

Just after the signal passes the beam splitter, the state of the joint system comprising Alice's random bit ($A$), the signal going to Bob ($S$) and signal seized by Eve ($E$) is described by

$$\hat{\rho}_{ASE}^{\rightarrow} = \int d^2\alpha P_{\sqrt{T_1}\gamma,G_1}(\alpha)\, \hat{\rho}_{ASE}^{\rightarrow}[\alpha] \tag{45}$$

where

$$\begin{aligned}
\hat{\rho}_{ASE}^{\rightarrow}[\alpha] &= \frac{1}{2}|0\rangle\langle 0|_A \otimes |\sqrt{1-r_E}\alpha\rangle\langle\sqrt{1-r_E}\alpha|_S \otimes |\sqrt{r_E}\alpha\rangle\langle\sqrt{r_E}\alpha|_E \\
&+ \frac{1}{2}|1\rangle\langle 1|_A \otimes |-\sqrt{1-r_E}\alpha\rangle\langle-\sqrt{1-r_E}\alpha|_S \otimes |-\sqrt{r_E}\alpha\rangle\langle-\sqrt{r_E}\alpha|_E,
\end{aligned} \tag{46}$$

and $r_E$ is the proportion of signal stolen by Eve. After the signal undergoes the second sequence of losses and amplifiers and just before it is measured by Bob, the state of the joint system is

$$\hat{\rho}_{ASE}^{\rightarrow\text{Bob}} = \int d^2\alpha\, P_{\sqrt{T_1}\gamma,G_1}(\alpha)\, \hat{\rho}_{ASE}^{\rightarrow\text{Bob}}[\alpha] \tag{47}$$

with

$$\hat{\rho}_{ASE}^{\rightarrow \text{Bob}}[\alpha] = \frac{1}{2}|0\rangle\langle 0|_A \otimes \left( \int d^2\beta\, P_{\sqrt{(1-r_E)T_2}\alpha,G_2}(\beta)\,|\beta\rangle\langle\beta|_S \right) \otimes |\sqrt{r_E}\alpha\rangle\langle\sqrt{r_E}\alpha|_E$$
$$+ \frac{1}{2}|1\rangle\langle 1|_A \otimes \left( \int d^2\beta\, P_{\sqrt{(1-r_E)T_2}(-\alpha),G_2}(\beta)\,|\beta\rangle\langle\beta|_S \right) \otimes |-\sqrt{r_E}\alpha\rangle\langle-\sqrt{r_E}\alpha|_E$$
$$= \frac{1}{2}\sum_{a=0,1}|a\rangle\langle a|_A \otimes \left( \int d^2\beta\, P_{\sqrt{(1-r_E)T_2}(-1)^a\alpha,G_2}(\beta)\,|\beta\rangle\langle\beta|_S \right) \otimes |(-1)^a\sqrt{r_E}\alpha\rangle\langle(-1)^a\sqrt{r_E}\alpha|_E.$$

$$(48)$$

Bob may receive the signal, may measure it and, together with Alice, may perform post-selection, which involves discarding the bits associated with the fail-outcome by communicating through the classical channel. The probability that Bob's measurement outcome is $b = \{0,1\}$ given that Alice sent bit is $a = \{0,1\}$ can be written as

$$p(b|a) = \text{tr}_{ASE}\left[\left(2 \cdot |a\rangle\langle a|_A \otimes \hat{E}_b \otimes \mathbb{I}_E\right)\hat{\rho}_{ASE}^{\rightarrow \text{Bob}}\right] = \int d^2\alpha\, P_{\sqrt{T_1}\gamma,G_1}(\alpha)\,p_{(-1)^a\alpha}(b|a), \quad (49)$$

where

$$p_{(-1)^a\alpha}(b|a) = \int d^2\beta\, P_{\sqrt{(1-r_E)T_2}(-1)^a\alpha,G_2}(\beta)\,\langle\beta|\hat{E}_b|\beta\rangle_S. \quad (50)$$

Thus, the probability of a conclusive outcome, which means that the bit will not be discarded on the stage of post-selection is

$$p(\sqrt{}) = \frac{1}{2}\sum_{a,b=0,1}p(b|a) = \int d^2\alpha\, P_{\sqrt{T_1}\gamma,G_1}(\alpha)\sum_{b=0,1}\frac{p_\alpha(b|0)+p_{-\alpha}(b|1)}{2}. \quad (51)$$

The final state of Alice's random bit ($A$), Bob's memory device storing the measurement outcome ($B$) and the signal stolen by Eve ($E$) after the post-selection, i.e., conditional to the successful measurement outcome, is

$$\hat{\rho}_{ABE}^{\text{f}} = \int d^2\alpha\, P_{\sqrt{T_1}\gamma,G_1}(\alpha)\,\hat{\rho}_{ABE}^{\text{f}}[\alpha] \quad (52)$$

where

$$\hat{\rho}_{ABE}^{\text{f}}[\alpha] = \frac{1}{2}|0\rangle\langle 0|_A \otimes \left( \sum_{b=0,1}\frac{p_\alpha(b|0)}{p(\sqrt{})}|b\rangle\langle b|_B \right) \otimes |\sqrt{r_E}\alpha\rangle\langle\sqrt{r_E}\alpha|_E$$
$$+ \frac{1}{2}|1\rangle\langle 1|_A \otimes \left( \sum_{b=0,1}\frac{p_{-\alpha}(b|1)}{p(\sqrt{})}|b\rangle\langle b|_B \right) \otimes |-\sqrt{r_E}\alpha\rangle\langle-\sqrt{r_E}\alpha|_E. \quad (53)$$

### 7.3 Probabilities

To obtain the probabilities $p(b|a)$, $a, b \in \{0,1\}$, we must first calculate $|\langle\beta|q\rangle|^2$:

$$|\langle\beta|q\rangle|^2 = \langle\beta|q\rangle\langle q|\beta\rangle = \langle\beta|\left(\frac{1}{2\pi}\int dp\, e^{ip(\hat{q}-q)}\right)|\beta\rangle = \frac{1}{2\pi}\int dp\, \langle\beta|e^{ip\left(\frac{\hat{a}^\dagger+\hat{a}}{2}-q\right)}|\beta\rangle$$

$$= \sqrt{\frac{2}{\pi}}e^{-2(\text{Re}\beta-q)^2}. \quad (54)$$

After substituting $|\langle\beta|q\rangle|^2$ into Eqs. (49), (50) we obtain

$$p(b=0|a=0) = \int d^2\alpha \, P_{\sqrt{T_1}\gamma,G_1}(\alpha) \int d^2\beta \, P_{\sqrt{(1-r_E)T_2}\alpha,G_2}(\beta) \int_\Theta^\infty dq \sqrt{\frac{2}{\pi}} e^{-2(\mathrm{Re}\beta-q)^2}$$

$$= \frac{1}{2}\left\{1 - \mathrm{erf}\left(\frac{\sqrt{2}[\Theta-\gamma\sqrt{G_1 T_1 G_2 T_2 (1-r_E)}]}{\sqrt{1+2(G_2-1)+2G_2 T_2(1-r_E)(G_1-1)}}\right)\right\}, \qquad (55)$$

$$p(1|0) = \frac{1}{2}\left\{1 - \mathrm{erf}\left(\frac{\sqrt{2}[\Theta+\gamma\sqrt{G_1 T_1 G_2 T_2 (1-r_E)}]}{\sqrt{1+2(G_2-1)+2G_2 T_2(1-r_E)(G_1-1)}}\right)\right\}, \qquad (56)$$

$$p(0|1) = \frac{1}{2}\left\{1 - \mathrm{erf}\left(\frac{\sqrt{2}[\Theta+\gamma\sqrt{G_1 T_1 G_2 T_2 (1-r_E)}]}{\sqrt{1+2(G_2-1)+2G_2 T_2(1-r_E)(G_1-1)}}\right)\right\}, \qquad (57)$$

$$p(1|1) = \frac{1}{2}\left\{1 - \mathrm{erf}\left(\frac{\sqrt{2}[\Theta-\gamma\sqrt{G_1 T_1 G_2 T_2 (1-r_E)}]}{\sqrt{1+2(G_2-1)+2G_2 T_2(1-r_E)(G_1-1)}}\right)\right\}, \qquad (58)$$

where

$$\mathrm{erf}(x) = \frac{2}{\sqrt{\pi}} \int_0^x e^{-t^2} dt. \qquad (59)$$

### 7.4 Eve's information

Let us estimate Eve's information about the raw key (per 1 bit) after post-selection, but before the error correction stage:

$$I(A,E) = H(A) - H_{\hat{\rho}_{AE}^f}(A|E) = 1 - H_{\hat{\rho}_{AE}^f}(A|E). \qquad (60)$$

The conditional entropy $H_{\hat{\rho}_{AE}^f}(A|E)$ is determined by the final density matrix of the $AE$-system, which is given in Eq. (52) and, employing the fact that

$$p_\alpha(0|0) + p_\alpha(1|0) = p_{-\alpha}(0|1) + p_{-\alpha}(1|1), \qquad (61)$$

can be written as

$$\hat{\rho}_{AE}^f = \mathrm{tr}_B \hat{\rho}_{ABE}^f = \int d^2\alpha \, Q_{\sqrt{}}[\alpha] \, \hat{\rho}_{AE}^f[\alpha] \qquad (62)$$

with

$$\hat{\rho}_{AE}^f[\alpha] = \frac{1}{2}|0\rangle\langle 0|_A \otimes |\sqrt{r_E}\alpha\rangle\langle\sqrt{r_E}\alpha|_E + \frac{1}{2}|1\rangle\langle 1|_A \otimes |-\sqrt{r_E}\alpha\rangle\langle-\sqrt{r_E}\alpha|_E,$$
$$Q_{\sqrt{}}[\alpha] = \frac{[p_\alpha(0|0)+p_\alpha(1|0)]P_{\sqrt{T_1}\gamma,G_1}(\alpha)}{p(\sqrt{})}. \qquad (63)$$

To find a lower bound of Eve's entropy (and therefore estimate the maximum of her information about the key), we consider a situation where Eve has some auxiliary register of variables $\alpha$ ($R_E$) and introduce the joint $AER_E$ state:

$$\rho^{\mathrm{f}}_{AER_E} = \frac{1}{2} \int d^2\, \alpha Q_{\sqrt{}}[\alpha] \sum_{a=0,1} |a\rangle\langle a|_A \otimes |(-1)^a \sqrt{r_E}\alpha\rangle\langle(-1)^a \sqrt{r_E}\alpha|_E$$

$$\otimes |\mathrm{reg}(\alpha)\rangle\langle\mathrm{reg}(\alpha)|_{R_E}. \tag{64}$$

Here the register states satisfy $\langle\mathrm{reg}(\alpha)|\mathrm{reg}(\alpha')\rangle= \delta^{(2)}(\alpha - \alpha')$. We note that first, by tracing out the register we recover the original state of *AE*-system

$$\mathrm{tr}_{R_E}\rho^{\mathrm{f}}_{AER_E} = \rho^{\mathrm{f}}_{AE}, \tag{65}$$

and second, the monotonicity of conditional entropy implies

$$H_{\rho^{\mathrm{f}}_{AE}}(A|E) \geq H_{\rho^{\mathrm{f}}_{AER_E}}(A|ER_E) = H(\rho^{\mathrm{f}}_{AER_E}) - H(\rho^{\mathrm{f}}_{ER_E}), \tag{66}$$

which simply states that after discarding the register, Eve can only lose information about the sent bit. To this end, by finding $H_{\rho^{\mathrm{f}}_{AER_E}}(A|ER_E)$ we can obtain a lower bound on $H_{\rho^{\mathrm{f}}_{AE}}(A|E).$

The matrix $\rho^{\mathrm{f}}_{AER_E}$ can be rewritten as

$$\rho^{\mathrm{f}}_{AER_E} = \sum_i \int d^2\alpha\, Q_{\sqrt{}}[\alpha]\lambda_i^{(\alpha)}\, |\psi_i^{(\alpha)}\rangle\langle\psi_i^{(\alpha)}| \otimes |\mathrm{reg}(\alpha)\rangle\langle\mathrm{reg}(\alpha)|_R, \tag{67}$$

where $\lambda_i^{(\alpha)}$ and $|\psi_i^{(\alpha)}\rangle$ are the eigenvalues and eigenstates of $\rho^{\mathrm{f}}_{AE}[\alpha].$ We thus obtain

$$
\begin{aligned}
H(\rho^{\mathrm{f}}_{AER_E}) \ &= -\sum_i \int d^2\alpha\, Q_{\sqrt{}}[\alpha]\, \lambda_i^{(\alpha)}\log(Q_{\sqrt{}}[\alpha]\lambda_i^{(\alpha)}) + C \\
&= -\sum_i \int d^2\alpha\, Q_{\sqrt{}}[\alpha]\, \lambda_i^{(\alpha)}(\log(Q_{\sqrt{}}[\alpha]) + \log(\lambda_i^{(\alpha)})) + C \\
&= -\int d^2\alpha\, Q_{\sqrt{}}[\alpha]\log(Q_{\sqrt{}}[\alpha]) - \int d^2\alpha\, Q_{\sqrt{}}[\alpha]\sum_i \lambda_i\log(\lambda_i) + C \\
&= -\int d^2\alpha\, Q_{\sqrt{}}[\alpha]\log(Q_{\sqrt{}}[\alpha]) + \int d^2\alpha\, Q_{\sqrt{}}[\alpha]H(\rho_{AE}[\alpha]) + C,
\end{aligned} \tag{68}
$$

where C is an additional correcting term, which we will not need to calculate explicitly. In the same way we obtain

$$H(\rho^{\mathrm{f}}_{ER_E}) = -\int d^2\alpha\, Q_{\sqrt{}}[\alpha]\log(Q_{\sqrt{}}[\alpha]) + \int d^2\alpha\, Q_{\sqrt{}}[\alpha]H(\rho^{\mathrm{f}}_E[\alpha]) + C. \tag{69}$$

Combining the two expressions, we obtain

$$
\begin{aligned}
H_{\rho^{\mathrm{f}}_{AE}}(A|E) \geq H_{\rho^{\mathrm{f}}_{AER_E}}(A|ER_E) \ &= H(\rho^{\mathrm{f}}_{AER_E}) - H(\rho^{\mathrm{f}}_{ER_E}) \\
&= \int d^2\alpha\, Q_{\sqrt{}}[\alpha]H(\rho^{\mathrm{f}}_{AE}[\alpha]) - (H(\rho^{\mathrm{f}}_E[\alpha])) \\
&= \int d^2\alpha\, Q_{\sqrt{}}[\alpha]H_{\rho^{\mathrm{f}}_{AE}[\alpha]}(A|E) \\
&= 1 - \int d^2\alpha\, Q_{\sqrt{}}[\alpha]h\left(\frac{1-|\langle\sqrt{r_E}\alpha|-\sqrt{r_E}\alpha\rangle|}{2}\right) \\
&= 1 - \int d^2\alpha\, Q_{\sqrt{}}[\alpha]\, h\left(\frac{1+e^{-2\,r_E|\alpha|^2}}{2}\right).
\end{aligned} \tag{70}
$$

We now can use Jensen's inequality

$$\langle h(x)\rangle \le h(\langle x\rangle) \to 1 - \langle h(x)\rangle \ge 1 - h(\langle x\rangle), \tag{71}$$

where $\langle x\rangle \equiv \int d^2\alpha\, Q_{\sqrt{}}[\alpha]\, x$:

$$H_{\rho_{AE}^{\mathrm{f}}}(A|E) \ge 1 - h\left(\frac{1+\langle e^{-2\,r_E|\alpha|^2}\rangle}{2}\right)$$

$$\langle e^{-2\,r_E|\alpha|^2}\rangle = \int d^2\alpha\, Q_{\sqrt{}}[\alpha]\, e^{-2\,r_E|\alpha|^2}. \tag{72}$$

where We find

$$\langle e^{-2\,r_E|\alpha|^2}\rangle = \frac{e^{-\frac{2r_E G_1 T_1|\gamma|^2}{1+2r_E\epsilon_1}}}{p(\sqrt{})[1+2r_E\epsilon_1]}\left\{1 - \frac{1}{2}\mathrm{erf}\left(\frac{\sqrt{2(1+2r_E\epsilon_1)}[\Theta - \frac{\sqrt{(1-r_E)G_2 T_2 G_1 T_1}\gamma}{1+2r_E\epsilon_1}]}{\sqrt{2\epsilon_2+1+2(1-r_E)G_2 T_2\epsilon_1+2r_E(2\epsilon_2+1)\epsilon_1}}\right)\right.$$
$$\left. - \frac{1}{2}\mathrm{erf}\left(\frac{\sqrt{2(1+2r_E\epsilon_1)}[\Theta + \frac{\sqrt{(1-r_E)G_2 T_2 G_1 T_1}\gamma}{1+2r_E\epsilon_1}]}{\sqrt{2\epsilon_2+1+2(1-r_E)G_2 T_2\epsilon_1+2r_E(2\epsilon_2+1)\epsilon_1}}\right)\right\}, \tag{73}$$

where $\epsilon_{12} \equiv G_{1,2} - 1$.

By substituting Eq. (73) into Eq. (72) and using Eq. (60) we obtain an upper bound on Eve's information.

*7.5 Bob's error rate*

Let us estimate Bob's error rate. Bob's information per 1 bit about the key after post-selection but before error correction is given by

$$I(A,B) = H(A) - H_{\hat{\rho}_{AB}^{\mathrm{f}}}(A|B) = 1 - H_{\hat{\rho}_{AB}^{\mathrm{f}}}(A|B) \tag{74}$$

and should ideally be equal to 1. Bob's error rate is therefore determined by the conditional entropy $H_{\hat{\rho}_{AB}^{\mathrm{f}}}(A|B)$:

$$H_{\hat{\rho}_{AB}^{\mathrm{f}}}(A|B) = H(\hat{\rho}_{AB}^{\mathrm{f}}) - H(\hat{\rho}_B^{\mathrm{f}}). \tag{75}$$

It follows from Eq. (52) that

$$H(\hat{\rho}_{AB}^{\mathrm{f}}) = -\sum_{a,b=0,1} \frac{p(b|a)}{2p(\sqrt{})}\log\left(\frac{p(b|a)}{2p(\sqrt{})}\right), \tag{76}$$

$$H(\hat{\rho}_B^{\mathrm{f}}) = -\sum_{b=0,1} \frac{p(b|a=0)+p(b|a=1)}{2p(\sqrt{})}\log\left(\frac{p(b|a=0)+p(b|a=1)}{2p(\sqrt{})}\right), \tag{77}$$

and the probabilities $p(b|a)$ and $p(\sqrt{})$ are given by Eqs. (55) to (58) and (51). Note that post-selection is symmetric,

$$p(0|0) + p(1|0) = p(0|1) + p(1|1) = p(\sqrt{}). \tag{78}$$

Then

$$H_{\hat{\rho}_{AB}^{\mathrm{f}}}(A|B) = h\left(\frac{p(0|0)}{p(\sqrt{})}\right), \qquad\qquad (79)$$

where

$$h(p) = -p\log(p) - (1-p)\log(1-p) \qquad\qquad (80)$$

is the binary entropy.

After the error correction procedure, Bob's information about the key becomes $\tilde{I}(A, B) = 1$, but Eve's information increases, and one can estimate it as

$$\tilde{I}(A,E) = I(A,E) + H_{\hat{\rho}_{AB}^{\mathrm{f}}}(A|B) \leq 1 - \min H_{\rho_{AE}^{\mathrm{f}}}(A|E) + H_{\hat{\rho}_{AB}^{\mathrm{f}}}(A|B). \qquad (81)$$

*8 Key rate*

Now, we can estimate the length $L_f$ of the final key after post-selection, error correction and privacy amplification:

$$L_f = p(\sqrt{})\, L \cdot (1 - \tilde{I}(A,E)) = p(\sqrt{})\, L \cdot \left(\min H_{\rho_{AE}^{\mathrm{f}}}(A|E) - H_{\rho_{AB}^{\mathrm{f}}}(A|B)\right). \qquad (82)$$

Equation (82) determines the final key generation rate. This equation in its explicit form, which is too cumbersome to be spelled out here, includes two parameters - the amplitude of the signal $\gamma$ and the measurement parameter $\Theta$ - which Alice and Bob can vary depending on $r_E$ to ensure the best rate (e.g., by numerically maximizing the function in Eq. (82)). Furthermore, as we recall from Sec. 5.1, Eq. (82) also includes the distance $d$ between two neighboring amplifiers and the distances $D_{AB}$ and $D_{AE}$ between the participants of the action - these are parameters which we consider fixed.

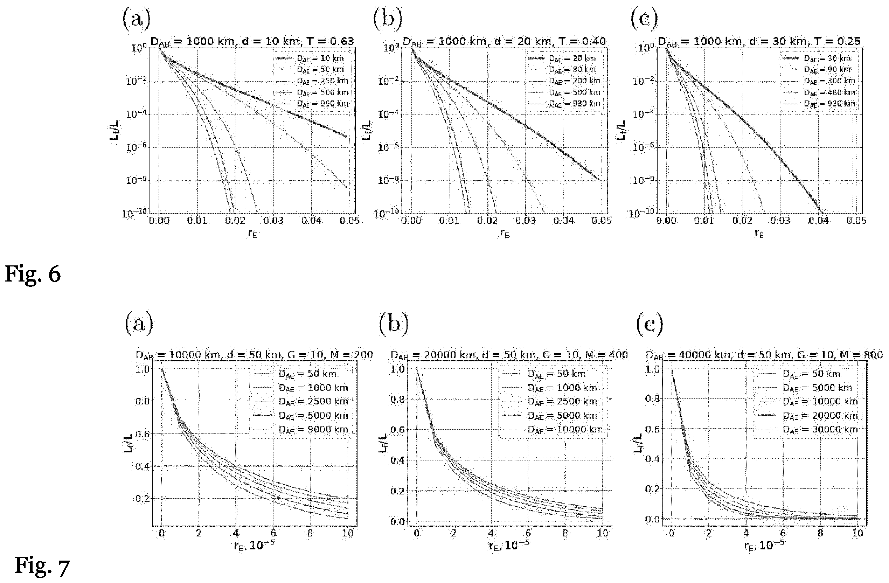

Figure 6 plots $L_f/L$ as function of $r_E$ for different values of distance $d$ between two neighbouring amplifiers, namely (a) $d$ = 10 km, (b) $d$ = 20 km, and (c) $d$ = 30 km. The distance between Alice and Bob is assumed fixed, $D_{AB}$ = 1,000 km. The different curves plotted in Fig. 6 correspond to varying distances $D_{AE}$ between Alice and Eve, from the smallest distance (top curve) to the largest distance (bottom curve). For every value of $r_E$ the parameters $\gamma$ and $\Theta$ are such that they maximize $L_f/L$. Since there are correlations imposed by the amplifiers, for Eve it is beneficial to intercept the signal near Bob. A secure and fast communication can be established if $L_f/L \gtrsim 10^{-6}$, thus Alice and Bob can allow Eve to steal no more than a few percent.

Similarly, Figure 7 shows $L_f/L$ as function of $r_E$ for different values of distance $D_{AB}$ between Alice and Bob, namely (a) $D_{AB}$ = 10,000 km, (b) $D_{AB}$ = 20,000 km, and (c) $D_{AB}$ = 40,000, under the assumption that we can technically measure $r_E$ with the theoretically allowed precision discussed in Sec. 3. The different curves plotted in Fig. 7 again correspond to varying distances $D_{AE}$ between Alice and Eve, from the smallest distance (top curve) to the largest distance (bottom curve). The distance between neighbouring amplifiers is assumed fixed, $d$ = 50 km. The amplitude of the signal $\gamma$ varies from $10^4$ for $r_E$ = 0.0 to $10^2$ for $r_E \sim 10^{-5}$.

The description of the embodiments and figures merely serve to illustrate the techniques of the present disclosure and the advantages that they achieve, but should not be understood to imply any limitation. The scope of the disclosure is to be determined based on the appended claims.

**Claims**

1. A method for determining a secret cryptographic key shared between a sending unit and a receiving unit that are connected via a communication channel comprising a plurality of spatially separated amplifiers, the method comprising:

   transmitting, at the sending unit, at least one electromagnetic test pulse to the receiving unit via the communication channel, and determining a signal loss $r_E$ in the communication channel caused by an eavesdropper based on the at least one electromagnetic test pulse detected at the receiving unit;
   transmitting, at the sending unit, a first sequence of electromagnetic pulses to the receiving unit via the communication channel for establishing a shared secret cryptographic key, wherein the transmitted first sequence of electromagnetic pulses along the communication channel are amplified by the spatially separated amplifiers; wherein each electromagnetic pulse of the first sequence of electromagnetic pulses corresponds to a bit of a random bit sequence according to a ciphering protocol; and

determining at least one ciphering parameter of the ciphering protocol by maximizing an expected key generation rate $L_f/L$ with respect to the at least one ciphering parameter using an information theoretic model for the expected key generation rate $L_f/L$,

wherein the determined signal loss $r_E$ and at least one amplification parameter of the spatially separated amplifiers are taken into account as input parameters to the information theoretic model.

2. The method according to claim 1, **characterized in that** the electromagnetic pulses of the first sequence of electromagnetic pulses are coherent electromagnetic pulses with a same pulse intensity, and a ciphering mode of the ciphering protocol is phase ciphering, and the at least one ciphering parameter corresponds to an absolute value $\gamma$ of a coherent state amplitude of the coherent electromagnetic pulses of the first sequence.

3. The method according to any of the preceding claims, **characterized in that** the at least one amplification parameter of the spatially separated amplifiers comprises a number of spatially separated amplifiers $M$, and/or a distance $d$ between two neighbouring amplifiers, and/or an amplification factor $G$ of the spatially separated amplifiers.

4. The method according to any of the preceding claims, **characterized in that** the information theoretic model for the expected key generation rate further takes into account a distance $D_{AB}$ between the sending unit and the receiving unit, and/or a distance $D_{AE}$ between the sending unit and the eavesdropper, and/or an intrinsic loss of the communication channel.

5. The method according to any of the preceding claims, **characterized in that** the method further comprises: performing a post-selection, in particular using homodyne detection, of the transmitted first sequence of electromagnetic pulses at the receiving unit, wherein bits corresponding to detected electromagnetic pulses with a quadrature component q not exceeding a minimal absolute value $\Theta$ are discarded as inconclusive.

6. The method according to claim 5, wherein a minimal absolute value $\Theta$ of the quadrature is determined by maximizing the expected key generation rate $L_f/L$ with respect to the at least one ciphering parameter and/or with respect to a measurement parameter corresponding to a quadrature $q$ of a detected electromagnetic pulse.

7. The method according to any of the preceding claims, **characterized in that** the method further comprises: estimating an error rate of deciphering at the receiving unit, in particular based on homodyne detection results, for at least a part of the transmitted first sequence of electromagnetic pulses and/or performing an error correction, wherein a block size of the error correction code is determined based on the estimated error rate of deciphering.

8. The method according to claim 7, **characterized in that** the error correction code comprises a low-density parity-check code (LDPC).

9. The method according to claim 7 or 8, **characterized in that** the error correction is performed adaptively, wherein subsets of the sequence of detected electromagnetic pulses become error corrected iteratively, and/or wherein an estimate of the error rate of deciphering is updated successively when a new subset becomes error corrected, and/or wherein the error correction code used in each iteration is adapted accordingly.

10. The method according to any of the preceding claims, **characterized in that** the method further comprises: performing privacy amplification, in particular using a hash function, in order to eliminate or limit information obtainable by the eavesdropper.

11. The method according to any of the preceding claims, **characterized in that** the spatially separated amplifiers comprise in-line Erbium doped fiber amplifiers (EDFA).

12. The method according to any of the preceding claims, **characterized in that** the information theoretic model for estimating the key generation rate $L_f/L$ takes into account a microscopic evolution of a density matrix corresponding to a state of an electromagnetic pulse transmitted from the sending unit along the communication channel to the receiving unit in the presence of loss and/or amplification, and/or post-selection and/or error correction.

**13.** A communication apparatus comprising means configured to implement the method according to any one of the claims 1 to 12.

**14.** A computer readable storage medium comprising instructions which, when executed by a computer, cause the computer to carry out the method according to any of the claims 1 to 12.

**15.** A computer program product comprising instructions which, when executed by a computer, cause the computer to carry out the method according to any of the claims 1 to 12.

Fig. 1

Fig. 2

Fig. 3

$$\hat{E}_1 \qquad \hat{E}_{\text{fail}} \qquad \hat{E}_0$$

$$-\sqrt{1-r_E}\gamma \qquad\qquad \sqrt{1-r_E}\gamma \qquad q$$

$$0$$

$$-\Theta \qquad \qquad \Theta$$

✓      ✗      ✓

discard

**Fig. 4**

$a$

Alice   $Loss_T$ — $Amp_G$ — $Loss_T$ — $Amp_G$ — ... — $Loss_T$ — $Amp_G$ — ...   Bob

Eve

$b$

$|\gamma_{0,1}\rangle = |\pm\gamma\rangle$    $\hat{\rho}_{AS}^{\square}$   $\hat{\rho}_{AS}^{\square}$

Alice   $Loss_{T_1}$ — $Amp_{G_1}$ — $Loss_{T_2}$ — $Amp_{G_2}$   Bob

Eve

**Fig. 5**

Fig. 6

Fig. 7

Europäisches
Patentamt

European
Patent Office

Office européen
des brevets

# EUROPEAN SEARCH REPORT

**Application Number**

EP 21 15 7942

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| Y | US 2014/099104 A1 (PETERS NICHOLAS A [US] ET AL) 10 April 2014 (2014-04-10) * abstract * * paragraphs [0013] - [0023] * * paragraphs [0034] - [0074] * ----- | 1-15 | INV. H04L9/08 |
| Y | CN 108 768 542 A (UNIV CHINA THREE GORGES CTGU) 6 November 2018 (2018-11-06) * abstract * * "Summary of the invention" * * "Detailed ways" * ----- | 1-15 | |
| A | CN 109 194 468 A (GUOKE QUANTUM COMMUNICATION NETWORK CO LTD ET AL.) 11 January 2019 (2019-01-11) * abstract * * "Summary of the invention" * ----- | 1-15 | |

**TECHNICAL FIELDS SEARCHED      (IPC)**

H04L

The present search report has been drawn up for all claims

| Place of search | Date of completion of the search | Examiner |
|---|---|---|
| Munich | 17 July 2021 | Di Felice, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 7942

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2021

| Patent document cited in search report | | Publication date | Patent family member(s) | | Publication date |
|---|---|---|---|---|---|
| US 2014099104 | A1 | 10-04-2014 | US 2014099104 A1<br>WO 2014055875 A1 | | 10-04-2014<br>10-04-2014 |
| CN 108768542 | A | 06-11-2018 | NONE | | |
| CN 109194468 | A | 11-01-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. SEKATSKI et al.** Cloning entangled photons to scales one can see. *Phys. Rev. A,* November 2010, vol. 82 (5
- **B. SANGUINETTI et al.** Quantum cloning for absolute radiometry. *Phys. Rev. Lett.,* August 2010, vol. 105 (8
- Quantum Theory. Concepts and Methods. **EVE ; A. PERES.** Fundamental Theories of Physics. Springer Netherlands, 2006
- **D. J. C. MACKAY.** Information Theory, Inference and Learning Algorithms. Cambridge University Press, 2003
- **C. H. BENNETT et al.** Privacy amplification by public discussion. *SIAM J. Comput.,* April 1988, vol. 17 (2), 210-229
- **I. DEVETAK ; A. WINTER.** Distillation of secret key and entanglement from quantum states. *Proc. Royal Soc. A: Mathematical, Physical and Engineering Sciences,* January 2005, vol. 461 (2053), 207-235
- Secret-key reconciliation by public discussion. **G. BRASSARD ; L. SALVAIL.** Proc. EUROCRYPT. Springer, 1994, vol. 93, 410-423